# EUROPEAN PATENT SPECIFICATION

(11) **EP 3 294 623 B1**
(45) Date of publication and mention of the grant of the patent: **17.04.2019**
(21) Application number: 16720860.2
(22) Date of filing: 09.05.2016
(51) Int. Cl.: B63H 21/17, B63H 23/24, H02K 49/10, B63H 23/22

(54) **A MARINE VESSEL PROPULSION DEVICE, A POD UNIT AND A MARINE VESSEL**
SCHIFFSANTRIEBSVORRICHTUNG, GONDELEINHEIT UND SCHIFF
DISPOSITIF DE PROPULSION DE NAVIRE MARITIME, UNITÉ DE NACELLE ET NAVIRE MARITIME

(30) Priority: 08.05.2015 SE 1550601
(43) Date of publication of application: 21.03.2018
(73) Proprietor: Rolls-Royce AB, 681 29 Kristinehamn (SE)
(72) Inventor: LOBELL, Anders, 691 36 Karlskoga (SE); STYRUD, Gunnar, 681 52 Kristinehamn (SE)
(74) Representative: Hynell Intellectual Property AB
(86) International application number: PCT/EP2016/060268
(87) International publication number: WO 2016/180750

(56) References cited:
- DE-A1- 3 139 816
- GB-A- 1 401 461
- JP-A- H0 318 268
- US-A- 5 690 519
- US-B1- 8 512 084

## Description

### FIELD OF INVENTION

The present invention in a first aspect relates to a marine vessel propulsion device including an electric motor, propeller means driven by the electric motor and gear means drivingly connecting the electric motor to the propeller means. The propulsion device is intended for use in a pod unit.

### BACKGROUND OF INVENTION

The propeller or the propellers of a marine vessel, e.g. pod unit, may be driven in various ways using electric motors, diesel motors or other kind of motors. In the following it will be referred to POD propulsion, without any limiting effect, since as is evident for the skilled person the principles are applicable to various kinds of marine propulsion. In a POD the motor may be located in the pod unit itself or within the hull of the vessel on which the pod unit is mounted. Normally the propeller(s) is required to operate at a relatively high torque, however at relatively low rpm. Normally it is therefore practical to gear down the motor speed to adequate speed and torque for the propeller(s). Thereby high costs and other disadvantages of motors at the required high torque are avoided.

Traditionally the gearing down of the rpm is performed by a mechanical gearbox. A mechanical gearbox, however, entails disadvantages such as generating noise and vibrations and requiring lubrication and cooling. They also need maintenance due to wearing, and are prone to jamming and failure.

US 2012/0094555 addresses the problems relating to the use of a mechanical gearbox by using a specially constructed electric motor that eliminates the need for a gearbox. The electric motor thus is constructed to have integral gearing with a pole piece rotor connected to an output shaft of the motor.

Although that kind of electric motor eliminates many of the disadvantages of using a mechanical gearbox it results in other kind of drawbacks. The integration of the driving function and gearing function into one and the same machine results in a more complicated construction than a traditional electric motor, and the dimension in the radial direction will be increased, which is a serious drawback with respect to the desire to keep the radial dimension of a pod as small as possible. The integration of the two functions in one unit also limits the flexibility regarding an optimal localisation of the components. Also will repair be more circumstantial in such an integrated machine in case either the gearing function or the driving function fails.

That document also discloses how a mechanical drive is geared down by using the integrated electric motor solely for gearing down function, whereby its windings are not energized. Drawbacks related to mechanical drive thereby will be maintained, and the use of the integrated electrical motor for the gearing down results in a generally complicated construction, especially regarding bearings and
US 8512084 discloses a propulsion system with a single propeller, whereby the prime mover is an electric motor which transmits power to the propeller by way of magnetic gearing.

JPS 63217968 discloses an electric motor having two rotors each connected to a propeller and a common centrally arranged stator. Further similar drive arrangements are disclosed in JP 2009292439, JP 2009113578, GB 1401461 and CN 101417702.

Moreover, GB 2 437 568 and US 2004/0108781 discloses pseudo-direct drive electrical machines which provides at least one stator and two moveable elements, such as inner and outer rotors, which interact in a magnetically geared manner via asynchronous harmonics of first and second pluralities of permanent magnets. From WO2009147377 it is known how to arrange for such a pseudo-direct drive to facilitate direct connection of an electrical machine as a generator to the electrical supply grid.

### SUMMARY OF INVENTION

The object of the present invention is to overcome drawbacks related to conventional marine vessel propulsion devices, and more specifically to attain an advantageous construction for providing an adequate torque to a marine vessel propeller driven by an electric machine.

This object is according to the first aspect of the invention achieved in that a marine vessel propulsion device of the kind specified in the preamble of claim 1 includes the specific features specified in the characterizing portion. Thus the gear means includes a magnetic gear that is axially offset the electric motor and has an input member drivingly connected to the electric motor and at least one output member drivingly connected to the propeller means. A magnetic gear as a separate unit is previous known as such, e.g. through US 2010/0207472, EP 0890179 and WO 9737362, which hereby are incorporated by reference.

Employing an electric motor for the driving, and a magnetic gear for gearing down the rpm results in a marine vessel propulsion device that is simple, efficient and reliable. Noise and vibration will be low. The dimensioning and localisation of the components of the device is flexible and thereby allow an optimization of the constructional realization of the device, whereby a pod having the propulsion device may be made more compact, e.g. resulting in a lower pod housing. The steering gear loads may be reduced. Counter rotating propellers can be applied without rotating electric parts. The propulsion efficiency with such contra-rotating propellers may be even higher, due to low rotational losses and low specific propeller loading. Further in a known manner the result of the invention may also imply that the diameters of the propellers can be smaller.

The terms "axial" and "radial" in the present application relates to the axis of the magnetic gear.

According to a preferred embodiment of the invented device, it includes a pod unit, and at least the propeller means is a part of the pod unit.

According to a further preferred embodiment, also the magnetic gear is a part of the pod unit.

According to a further preferred embodiment, also the electric motor is a part of the pod unit.

Although the present invention may be used also for in-hull propulsion devices, its advantages are most beneficial for application at pod driving.

According to the second aspect of the invention, a pod unit includes a marine vessel propulsion device according to the present invention, in particular to any of the preferred embodiments thereof, wherein the electric motor, the propeller means and the magnetic gear are coaxially arranged.

The invented pod unit has advantages corresponding to those of the invented marine vessel propulsion device and the preferred embodiments thereof, which advantages have been described above. The coaxial arrangement of the components further contributes to a compact and simple arrangement making the propulsion device particularly suitable for pod unit application.

According to a preferred embodiment of the invented pod unit, the magnetic gear has a radial arrangement, having an inner rotor drivingly connected to the input member, a stator surrounding the inner rotor and an intermediate rotor located radially between the inner rotor and the stator and being drivingly connected to the output member.

This embodiment is particularly useful when the propeller means is one single propeller or unitarily rotating propellers. The construction will be simple, and the radial arrangement leads to a compact construction.

According to a further preferred embodiment, the magnetic gear is arranged for increasing the torque T₁ of the input member to the torque T₂ of the output member with a factor in the range of 1-30.

A torque increase within this range in most cases is well adapted for what is required for those motors that normally will be contemplated for use, and with respect to the torque need at various conditions. Preferably the factor is in the range of 2-15.

According to a further preferred embodiment, the at least one output member includes a first output member and a second output member coaxial with the first output member, and the propeller means includes a first propeller drivingly connected to the first output member and a second propeller drivingly connected to the second output member, which first and second propellers are arranged to rotate in opposite directions.

Through this embodiment it will be possible to provide the unit with two aligned propellers rotating in opposite directions, and at different torques and different speeds. The use of two propellers arranged in this way is advantageous for the driving performance of the pod unit with regards to efficiency and size.
According to a further preferred embodiment, the magnetic gear is in a radial arrangement having a first rotor drivingly connected to the input member, a second rotor drivingly connected to the second output member, and an intermediate rotor located radially between the first rotor and the second rotor and being drivingly connected to the first output member.

Also this embodiment leads to a simple and compact construction in case the pod unit is provided with two independent propellers.

It is constructionally more convenient to connect the input member to the innermost rotor, i.e. with respect to the journaling.

According to a further preferred embodiment, the second propeller is located axially between the first propeller and the magnetic gear.

According to a further preferred embodiment, the magnetic gear is arranged for increasing the torque T₁ of the input member to the torque T₂ of the first output member with a factor in the range of 1 to 30. Preferably, this range is 2 to 15.

According to a further preferred embodiment, the magnetic gear in connection with CRPs is arranged for providing a higher torque to the front most propeller, i.e. the propeller furthest away from the POD housing with a pulling CRP and the propeller closest to the POD housing with a pushing CRP, e.g. to provide a torque T₃ to the second output member that is smaller than the torque T₂ of the first output member in a pulling CRP.

Different torque of the propellers contribute to optimize the driving performance. By arranging the torque T₃ of the second output member different than that T₂ of the first output member the magnetic design of the components of the magnetic gear may be able to operate with extra high efficiency.

According to a further preferred embodiment, the magnetic gear is arranged for increasing the torque T₁ of the input member to the torque T₃ of the second output member for a pulling CRP such that T₃ = T₁(1-i_{eff}), where T₃ is the torque of the second output member, T₁ is the torque of the first input member and i_{eff} is the ratio of the torque T₂ of the first output member to the torque T₁ of the input member.

According to a further preferred embodiment, the torque T₂ of the first output member in a relation to the torque T₃ of the second output member may be tuned/balanced by means of choosing pitch of the propellers.

According to the third aspect of the invention, the object is met in that a marine vessel is provided with at least one marine vessel propulsion unit, in particular according to any of the preferred embodiments thereof or provided with at least one pod unit according to the present invention, in particular according to any of the preferred embodiments thereof.

The invented marine vessel has advantages corresponding to those of the invented marine vessel propulsion unit and the invented pod unit, respectively, and the preferred embodiments of these, which advantages have been described above.

The above mentioned preferred embodiments of the invention are specified in the dependent claims. It is to be understood that further preferred embodiments may be formed by any possible combination of features in the preferred embodiments and by any possible combination of these and features described in the following description of examples of the invention.

### BRIEF DESCRIPTION OF THE DRAWINGS

Fig. 1 is a schematic longitudinal section through a pod unit according to a first example of the invention.
Fig. 2 is a schematic longitudinal section through a pod unit according to a second example of the invention.
Fig. 3 is a schematic side view of a marine vessel according to an example of the present invention, and,
Fig. 4 is a schematic side view of the marine vessel according to the example of fig. 3 presenting an example of torque distribution in accordance to one of the preferred embodiment according to the invention.

### DETAILED DESCRIPTION OF EXAMPLES

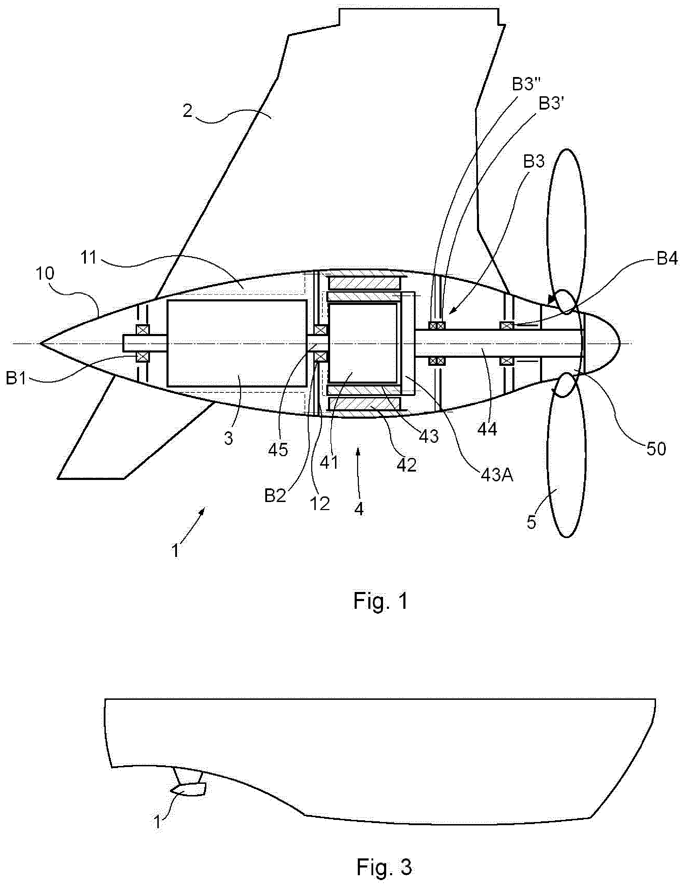

Fig. 1 in a schematic longitudinal section through a pod unit 1 illustrates a first example of the invention. The pod unit 1, with its casing 10, is by a pod neck 2 attached to the hull of a marine vessel (not shown) and has an electric motor 3, a magnetic gear 4 and a propeller 5. The propeller 5 in this example is mounted at the front end of the pod unit 1 as seen in the travel direction of the vessel.

The rotor of the electric motor 3 is by a shaft 45 drivingly connected to the inner rotor 41 of the magnetic gear 4, which shaft 45 thus is the input member of the magnetic gear. The inner rotor 41 is provided with permanent magnets. The magnetic gear also has a stator 42, fixed to the casing 10, surrounding the inner rotor 41 and having permanent magnets. In the radial space between the inner rotor 41 and the stator 42 there is an intermediate rotor 43 arranged with an air gap towards the inner rotor 41 and the stator 42, respectively. The intermediate rotor 43 is by a shaft 44 drivingly connected to the propeller 5, which shaft thus is the output member of the magnetic gear 4.

Rotation of the inner rotor 41 results in a driving magnetic force on the intermediate rotor. By appropriate arrangement of the permanent magnets the rotation of the intermediate rotor 43 will occur at a lower rpm and correspondingly higher torque than the rotation of the inner rotor. Normally the magnets are tuned for an output torque that is 2 to 20 times larger than the input torque.

This also provides for the advantage that motors with higher rpm may be used than in traditional applications. According to the inventive concept motors having rpm within the range of 500 to 3000 may preferably be used, (belonging to a "standard range" for motors), whereas traditionally special motors need to be used of about 75 to 350 rpm. Further the inventive concept enables arrangement of recesses/pockets 11 within the casing 10 for better cooling of the motor 3, i.e. enabling water to flow near the stator of the motor for improved cooling.

Moreover, the arrangement according to the invention enables a construction that is beneficial regarding the bearing arrangement, e.g. positions that are easily lubricated and/or maintained. A first bearing B1, preferably a radial bearing or CARB, is positioned at a first side of the motor 3, that radially positions a first end of the motor. A second bearing B2 is positioned at the other side of the motor 3, which bearing both positions the motor radially and axially, by means of an intermediate support wall 12. Preferably this bearing B2 also is used for positioning of the inner rotor 41, by means of having a common shaft 45 for output from the motor and input to the inner rotor 41. The outer rotor 43 has a bridging member 43A, that is attached to the periphery of the rotor 43 and which centrally is attached to the inner end of the propeller shaft 44. A first B3 and a second B4 bearing arrangement, respectively, is used for the propeller shaft 44, both of which may be positioned to be easily accessible. Hence, the inventive concept also presents an advantage related to the arrangements of needed bearings B1-B4, especially by providing a possibility to position the joint bearing B2 of the motor 3 and magnetic gear 4 accessible by means of an intermediate support wall 12 in a position between the motor 3 and the magnetic gear 4. In the shown embodiment the inner bearing arrangement B3 of the propeller shaft 44, comprises both a radial bearing B3" and a thrust bearing B3'. A second bearing B4, preferably a radial bearing, is arranged close to the propeller 5. As a first alternative the thrust bearing B3' may be arranged in connection with the second bearing B4. As a second alternative the thrust bearing B3' may be arranged in connection with the propeller cap 50 to transfer thrust directly to the casing 10 (not shown), or indeed any combination of the alternatives.

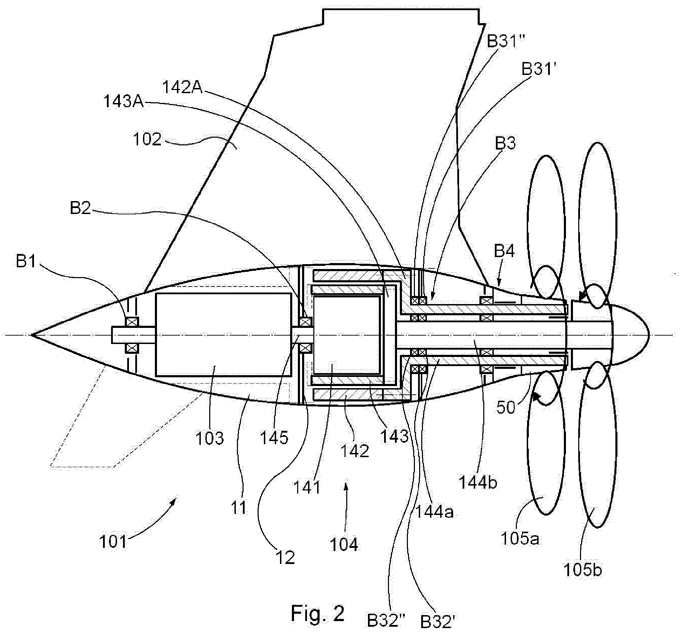

Fig. 2 in a corresponding longitudinal section illustrates an example of a pod unit 101 having two contra-rotating propellers 105a, 105b, i.e. a CRP. The pod unit 101 is by a pod neck 102 attached to the hull of a marine vessel (not shown) and has an electric motor 103, a magnetic gear 104 and two propellers 105a, 105b.

The rotor of the electric motor 103 is by a shaft 145 drivingly connected to a first, inner rotor 141 of the magnetic gear, which shaft 145 thus is the input member of the magnetic gear 104. The inner rotor 141r is provided with permanent magnets. A second, outer rotor 142 surrounds the inner rotor 141 and is provided with permanent magnets. In the radial space between the inner rotor 141 and the outer rotor 142 there is an intermediate rotor 143 with an air gap towards the inner rotor 141 and the outer rotor 142, respectively. The intermediate rotor 143 is drivingly connected, via a first bridging member 143A, to a first, axially outer propeller 105b through a first output member 144b being a shaft. The outer rotor 142 is drivingly connected, via a second bridging member 142A, to a second, axially inner propeller 105a through a second output member 144a being a hollow shaft. The second output member144a is journalled on the first output member 144b, allowing relative rotation of these. Basically, the same advantages are gained also in this embodiment regarding construction related to bearings, especially by providing a possibility to position the joint bearing B2 of the motor 103 and magnetic gear 104 accessible in a position between the motor 103 and the magnetic gear 104. In principle the same alternatives as mentioned above regarding alternate positions of the bearings may also be applied in this embodiment. However, one further alternative, due to having the outer magnetic gear part, i.e. the "stator part 142", rotational, there exist an alternative to have its thrust bearing B31' between that rotor 142 and the casing 10.

In operation, the electric motor 103 rotates the inner rotor 141 in a first direction. By a tuned distribution and arrangement of the magnets of the inner rotor 141, pole pieces of the intermediate rotor 143 and the magnets of the outer rotor 142, the latter will rotate in the opposite direction with reduced speed and increased torque. The magnetic forces will bring the intermediate rotor 143 to rotate in the same direction as the inner rotor 141 with reduced speed and increased torque. Through the output members 144a, 144b the propellers 105a, 105b consequently will rotate in opposite directions to each other and both will exert a torque that is higher than that generated by the electric motor 101. The arrangement of the magnets is preferably selected such that the torque, T₂ of the first, axially outer propeller 105b is 2 to 15 times as large as the torque of the electric motor 103 and such that the torque T₃ of the second, axially inner propeller 105a in the opposite direction is slightly lower, namely such that T₃ = T₁(1-i_{eff}), where i_{eff} is related to the ratio of the torque T₂ of the first output member 144b to the torque T₁ of the input member 145.

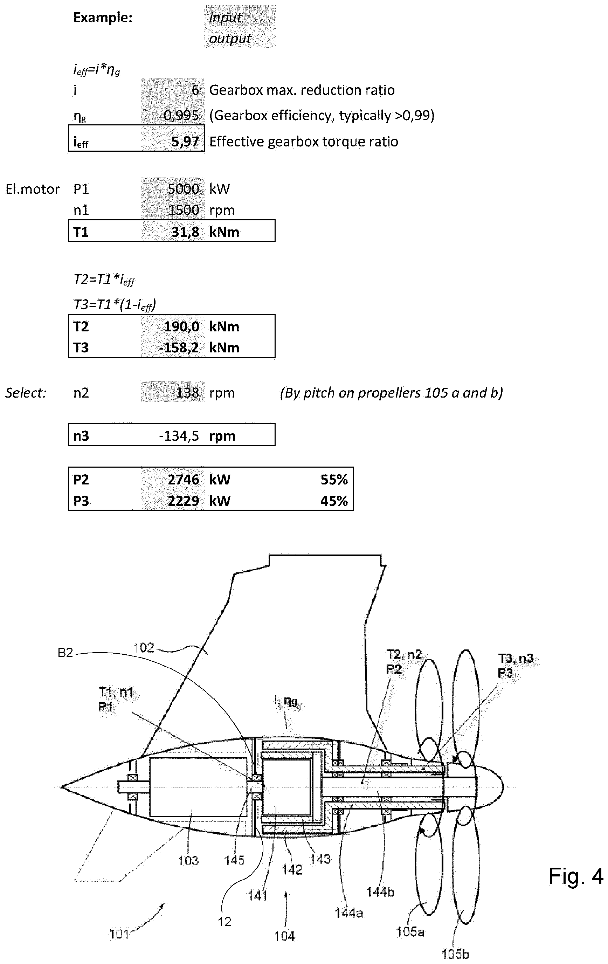

In fig. 4 there is shown an example of torque distribution that may be used in connection with a pod unit using the invention. In this embodiment the magnetic gear box 104 has maximum reduction of I=6. Furthermore, the efficiency of the magnetic gear box is 0.995. One of the major advantages with using a magnetic gear box is that the efficiency is typically larger than 0.99, which is substantially higher than what can be achieved with a mechanical gear box. This will result in a high effective gear box torque ratio, e.g. of 5.97 according to the example. Having motor 103 providing a power output, PI of 5000 kW at a rotational speed of 1500 rpm will provide a first output torque T₁ of 31,8 kNm. The torque T₂ of the first output member 105b will then amount to 190 kNm. Further the torque T₃ of the second output member 105a will amount to 158.2 kNm, presenting a rotational direction that is opposite to the first output member 105b.

As already mentioned the rotational speed ratio between the first and the second output members may be selected through design selecting the pitch of the propellers 105a, 105b. In a second example there is presented that the pitch of the propellers 105a, 105b have been changed to provide for a rotational speed n2 of the first output member, i.e. the largest propeller 105b, to be 138 rpm. This will lead to a rotational speed of the other propeller 105a of 134.5 rpm, in the opposite direction. As a result, the power distribution achieved will be divided such that the first output member 105b will obtain a power output of 2746 Kw (55% of the input power) and the other propeller 105a will obtain a power output of 2229 Kw (45% of the input power).

The invention is not limited to the embodiment described above, but may be varied within the scope of the appended claims. For instance, for the skilled person it is evident that the intermediate support wall 1 may be arranged in various ways to fulfil the purpose of supporting the joint bearing B2. Also in other aspects it is evident for the skilled person that there exist various obvious design options to fulfil the intended functional purpose.

## Claims

1. A marine vessel propulsion device including an electric motor (3, 103), propeller means (5, 105a, 105b) driven by the electric motor and gear means (4, 104) drivingly connecting the electric motor (3, 103) to the propeller means (5, 105a, 105b), wherein the gear means includes a magnetic gear (4, 104) forming a part of a pod unit that is axially offset the electric motor (3, 103) and having an input member (45, 145) drivingly connected to the electric motor (3, 103) and at least one output member (44, 144a, 144b) drivingly connected to the propeller means (5, 105a, 105b), and wherein a joint bearing (B2) is arranged for the magnetic gear (4, 104) and the electric motor (3, 103) between the magnetic gear (4, 104) and the electric motor (3, 103), **characterized in that** the at least one output member includes a first output member (144b) and a second output member (144a) coaxial with the first output member, and said propeller means includes a first propeller (105b) drivingly connected to said first output member (144b) and a second propeller (105a) drivingly connected to said second output member (144a), which first and second propellers (105b, 105a) are arranged to rotate in opposite directions.

2. A marine vessel propulsion device according to claim 1, wherein an intermediate support wall (12) is arranged to support said joint bearing (B2).

3. A marine vessel propulsion device according to any of claims 1-2, wherein the electric motor (3, 103), the propeller means (5, 105a, 105b) and the magnetic gear (4, 104) are coaxially arranged.

4. A marine vessel propulsion device according to claim 3, wherein the magnetic gear (4) has a radial arrangement having an inner rotor (41) drivingly connected to the input member (45), a stator (42) surrounding the inner rotor (41) and an intermediate rotor (43) located radially between the inner rotor (41) and the stator (42), and being drivingly connected to said at least one output member (44).

5. A marine vessel propulsion device according to claim 4, wherein the magnetic gear (4) is arranged for increasing the torque (T₁) of said input member (45) to the torque of said at least one output member (44) with a factor in the range of 2 to 20.

6. A marine vessel propulsion device according to claim 1, wherein the magnetic gear (104) is in a radial arrangement having a first rotor (141) drivingly connected to the input member (145), a second rotor (142) drivingly connected to the second output member (144a) and an intermediate rotor (143) located radially between the first rotor (141) and the second rotor (142) and being drivingly connected to the first output member (144b).

7. A marine vessel propulsion device according to claim 6, wherein said first rotor (141) is located radially inside the intermediate rotor (143) and said second rotor (142) is located outside the intermediate rotor (143).

8. A marine vessel propulsion device according to any one of claims claim 1, 6, 7, wherein said second propeller is (105a) located axially between the first propeller (105b) and the magnetic gear (104).

9. A marine vessel propulsion device according to any one of claims 1, 6-8, wherein the magnetic gear (104) is arranged for increasing the torque (T₁) of said input member (145) to the torque of said first output member (144b) with a factor in the range of 2 to 20.

10. A marine vessel propulsion device according to any one of claims 1, 6-9, wherein the magnetic gear (141) is arranged to provide a torque to the second output member (144a) that is different than the torque of the first output member (144b).

11. A marine vessel propulsion device according to claim 10, wherein the magnetic gear (104) is arranged for increasing the torque (T₁) of said input member (145) to the torque of said second output member (144a) such that T₃ = T₁(1-i_{eff}), where T₃ is the torque of the second output member (144a), T₁ is the torque of the first input member (145) and i_{eff} is the ratio of the torque T₂ of the first output member (144b) to the torque (T1) of the input member (145).

12. A marine vessel provided with at least one propulsion device according to any one of claims 1-11.

## Patentansprüche

1. Schiffsantriebsvorrichtung, die einen Elektromotor (3, 103), Antriebsmittel (5, 105a, 105b), die von dem Elektromotor angetrieben werden, und Getriebemittel (4, 104), die den Elektromotor (3, 103) antriebsmäßig mit dem Antriebsschraubenmittel (5, 105a, 105b) verbinden, beinhaltet, wobei das Getriebemittel ein magnetisches Getriebe (4, 104) beinhaltet, das ein Teil einer Gondeleinheit bildet, die von dem Elektromotor (3, 103) axial versetzt ist und ein Eingangselement (45, 145), das mit dem Elektromotor (3, 103) antriebsverbunden ist, und mindestens ein Ausgangselement (44, 144a, 144b) aufweist, das mit dem Antriebsschraubenmittel (5, 105a, 105b) antriebsverbunden ist, und wobei ein Gelenklager (B2) für das magnetische Getriebe (4, 104) und den Elektromotor (3, 103) zwischen dem magnetischen Getriebe (4, 104) und dem Elektromotor (3, 103) angeordnet ist, **dadurch gekennzeichnet, dass** das mindestens eine Ausgangselement ein erstes Ausgangselement (144b) und ein zweites Ausgangselement (144a), das koaxial zu dem ersten Ausgangselement verläuft, beinhaltet, und das Antriebsschraubenmittel eine erste Antriebsschraube (105b), die mit dem ersten Ausgangselement (144b) antriebsverbunden ist, und eine zweite Antriebsschraube (105a), die mit dem zweiten Ausgangselement (144a) antriebsverbunden ist, beinhaltet, wobei die erste und die zweite Antriebsschraube (105b, 105a) angeordnet sind, um sich in entgegengesetzter Richtung zu drehen.

2. Schiffsantriebsvorrichtung nach Anspruch 1, wobei eine Zwischenstützwand (12) angeordnet ist, um das Gelenklager (B2) zu stützen.

3. Schiffsantriebsvorrichtung nach einem der Ansprüche 1-2, wobei der Elektromotor (3, 103), das Antriebsschraubenmittel (5, 105a, 105b) und das magnetische Getriebe (4, 104) koaxial angeordnet sind.

4. Schiffsantriebsvorrichtung nach Anspruch 3, wobei das magnetische Getriebe (4) eine radiale Anordnung aufweist, die einen Innenrotor (41), der mit dem Eingangselement (45) antriebsverbunden ist, einen Stator (42), der den Innenrotor (41) umgibt, und einen Zwischenrotor (43), der sich radial zwischen dem Innenrotor (41) und dem Stator (42) befindet, aufweist und mit mindestens einem Ausgangselement (44) antriebsverbunden ist.

5. Schiffsantriebsvorrichtung nach Anspruch 4, wobei das magnetische Getriebe (4) angeordnet ist, um das Drehmoment (T₁) des Eingangselements (45) auf das Drehmoment des mindestens einen Ausgangselements (44) mit einem Faktor im Bereich von 2 bis 20 zu erhöhen.

6. Schiffsantriebsvorrichtung nach Anspruch 1, wobei das magnetische Getriebe (104) sich in einer radialen Anordnung befindet, die einen ersten Rotor (141), der mit dem Eingangselement (145) antriebsverbunden ist, einen zweiten Rotor (142), der mit dem zweiten Ausgangselement (144a) antriebsverbunden ist, und einen Zwischenrotor (143), der sich radial zwischen dem ersten Rotor (141) und dem zweiten Rotor (142) befindet, aufweist und mit dem ersten Ausgangselement (144b) antriebsverbunden ist.

7. Schiffsantriebsvorrichtung nach Anspruch 6, wobei der erste Rotor (141) sich radial innerhalb des Zwischenrotors (143) befindet und der zweite Rotor (142) sich außerhalb des Zwischenrotors (143) befindet.

8. Schiffsantriebsvorrichtung nach einem der Ansprüche 1, 6, 7, wobei die zweite Antriebsschraube (105a) sich axial zwischen der ersten Antriebsschraube (105b) und dem magnetischen Getriebe (104) befindet.

9. Schiffsantriebsvorrichtung nach einem der Ansprüche 1, 6-8, wobei das magnetische Getriebe (104) angeordnet ist, um das Drehmoment (T₁) des Eingangselements (145) auf das Drehmoment des ersten Ausgangselements (144b) mit einem Faktor im Bereich von 2 bis 20 zu erhöhen.

10. Schiffsantriebsvorrichtung nach einem der Ansprüche 1, 6-9, wobei das magnetische Getriebe (141) angeordnet ist, um dem zweiten Ausgangselement (144a) ein Drehmoment bereitzustellen, das sich von dem Drehmoment des ersten Ausgangselements (144b) unterscheidet.

11. Schiffsantriebsvorrichtung nach Anspruch 10, wobei das magnetische Getriebe (104) angeordnet ist, um das Drehmoment (T₁) des Eingangselements (145) auf das Drehmoment des zweiten Ausgangselements (144a) zu erhöhen, sodass t₃ = T₁ (1-i_{eff}), wobei T₃ das Drehmoment des zweiten Ausgangselements (144a) ist, T₁ das Drehmoment des erstens Eingangselements (145) ist und i_{eff} das Verhältnis des Drehmoments T₂ des ersten Ausgangselements (144b) zu dem Drehmoment (T1) des Eingangselements (145) ist.

12. Schiffsantriebsvorrichtung, die mit mindestens einer Antriebsvorrichtung nach einem der Ansprüche 1-11 bereitgestellt ist.

## Revendications

1. Un dispositif de propulsion de bateau de mer comprenant un moteur électrique (3, 103), des moyens formant hélice (5, 105a, 105b) entraînés par le moteur électrique et des moyens formant engrenage (4, 104) reliant de manière entraînante le moteur électrique (3, 103) aux moyens formant hélice (5, 105a, 105b), les moyens formant engrenage comprenant une roue magnétique (4, 104) formant une partie d'une unité formant nacelle qui est décalée axialement par rapport au moteur électrique (3, 103) et ayant un organe d'entrée (45, 145) relié de manière entraînante au moteur électrique (3, 103) et au moins un organe de sortie (44, 144a, 144b) relié de manière entraînante aux moyens formant hélice (5, 105a, 105b), un palier de jonction (B2) étant agencé pour l'engrenage magnétique (4, 104) et le moteur électrique (3, 103) entre l'engrenage magnétique (4, 104) et le moteur électrique (3, 103), **caractérisé en ce que** ledit au moins un organe de sortie comprend un premier organe de sortie (144b) et un deuxième organe de sortie (144a) coaxial au premier organe de sortie, et lesdits moyens formant hélice comprenant une première hélice (105b) reliée de manière entraînante audit premier organe de sortie (144b) et une deuxième hélice (105a) reliée de manière entraînante audit deuxième organe de sortie (144a), lesquelles première et deuxième hélices (105b, 105a) sont disposées pour tourner en sens inverse.

2. Un dispositif de propulsion pour bateau de mer selon la revendication 1, dans lequel une paroi de support intermédiaire (12) est agencée pour supporter ledit palier de jonction (B2).

3. Un dispositif de propulsion d'un navire de mer selon l'une quelconque des revendications 1 à 2, dans lequel le moteur électrique (3, 103), les moyens formant hélice (5, 105a, 105b) et l'engrenage magnétique (4, 104) sont agencés de façon coaxiale.

4. Un dispositif de propulsion de navire maritime selon la revendication 3, dans lequel l'engrenage magnétique (4) a un agencement radial ayant un rotor intérieur (41) relié de manière entraînante à l'organe d'entrée (45), un stator (42) entourant le rotor intérieur (41) et un rotor intermédiaire (43) situé radialement entre le rotor intérieur (41) et le stator (42), et étant relié de manière entraînante audit au moins un organe de sortie (44).

5. Un dispositif de propulsion de navire maritime selon la revendication 4, dans lequel l'engrenage magnétique (4) est agencé pour augmenter le couple (T₁) dudit organe d'entrée (45) au couple dudit au moins un organe de sortie (44) avec un facteur compris entre 2 et 20.

6. Un dispositif de propulsion de navire de mer selon la revendication 1, dans lequel l'engrenage magnétique (104) est dans un agencement radial ayant un premier rotor (141) relié de manière entraînante à l'organe d'entrée (145), un deuxième rotor (142) relié de manière entraînante au deuxième organe de sortie (144a) et un rotor intermédiaire (143) situé radialement entre le premier rotor (141) et le deuxième rotor (142) et étant relié de manière entraînante au premier organe de sortie (144b).

7. Un dispositif de propulsion de navire de mer selon la revendication 6, dans lequel ledit premier rotor (141) est situé radialement à l'intérieur du rotor intermédiaire (143) et ledit deuxième rotor (142) est situé en dehors du rotor intermédiaire (143).

8. Un dispositif de propulsion de navire de mer selon l'une quelconque des revendications 1, 6, 7, dans lequel ladite deuxième hélice (105a) est située axialement entre la première hélice (105b) et le mécanisme magnétique (104).

9. Un dispositif de propulsion de navire de mer selon l'une quelconque des revendications 1, 6 à 8, dans lequel l'engrenage magnétique (104) est agencé pour augmenter le couple (T₁) dudit organe d'entrée (145) au couple dudit premier organe de sortie (144b) avec un facteur compris entre 2 et 20.

10. Un dispositif de propulsion de navire de mer selon l'une quelconque des revendications 1, 6 à 9, dans lequel l'engrenage magnétique (141) est agencé pour fournir un couple au deuxième organe de sortie (144a) qui est différent du couple du premier organe de sortie (144b).

11. Un dispositif de propulsion de navire de mer selon la revendication 10, dans lequel l'engrenage magnétique (104) est agencé pour augmenter le couple (T₁) dudit organe d'entrée (145) jusqu'au couple dudit deuxième organe de sortie (144a) de sorte que T₃ = T₁(1-i_{eff}), T₃ étant le couple du deuxième organe de sortie (144a), T₁ étant le couple du premier organe d'entrée (145) et i_{eff} étant le rapport du couple T₂ du premier organe de sortie (144b) au couple (T₁) de l'organe d'entrée (145).

12. Un navire de mer muni d'au moins un dispositif de propulsion selon l'une quelconque des revendications 1 à 11.
